# FASCICULE DE BREVET EUROPEEN

(11) **EP 1 821 447 B1**
(45) Date de publication et mention de la délivrance du brevet: **10.12.2008**
(21) Numéro de dépôt: 07290096.2
(22) Date de dépôt: 24.01.2007
(51) Int. Cl.: H04L 7/00, H04L 7/10, H04J 3/06, B61L 3/12

(54) **Système sécuritaire d'acquisition d'informations numériques**
Sicherheitssystem zur Rückgewinnung von digitalen Daten
Security system for recovering digital data

(30) Priorité: 17.02.2006 FR 0601431
(43) Date de publication de la demande: 22.08.2007
(73) Titulaire: ALSTOM Transport SA, 92300 Levallois-Perret (FR)
(72) Inventeur: Linares, Michel, 92700 Colombes (FR)
(74) Mandataire: Blot, Philippe Robert Emile

(56) Documents cités:
- EP-A- 1 523 132
- FR-A- 2 856 645
- MININ V A ET AL: "Development of the communications-based train control system for Moscow Metro" RAILROAD CONFERENCE, 1997., PROCEEDINGS OF THE 1997 IEEE/ASME JOINT BOSTON, MA, USA 18-20 MARCH 1997, NEW YORK, NY, USA,IEEE, US, 18 mars 1997 (1997-03-18), pages 201-210, XP010218242 ISBN: 0-7803-3854-5

## Description

La présente invention concerne un système sécuritaire d'acquisition d'informations numériques.

Dans les systèmes d'acquisition et de traitement de données, il est souvent nécessaire de garantir le fonctionnement sécuritaire de ceux-ci quand ils sont utilisés dans des applications critiques comme par exemple la gestion de systèmes ferroviaires ou de centrales nucléaires.

On appelle fonctionnement en sécurité ou sécuritaire un mode de fonctionnement dans lequel les erreurs de traitement, dues à un aléa, par exemple, sont rapidement détectées.

De tels systèmes utilisent souvent des techniques de redondance. Par exemple, la technique bien connue des plates-formes logicielles dites « deux parmi trois » utilise trois processeurs qui effectuent exactement la même opération. En cas de résultats différents, la solution retenue est celle obtenue par deux des processeurs.

Des solutions se rapportant à des systèmes d'acquisition de données sont décrites dans les demandes de brevet EP-A-1 523 132 et FR-A-2 856 645 et l'article de MININ et al. intitulé « Development of the communications based train control system for Moscow Metro » publié dans les proceedings of the 1997 IEEE/ASME JOINT, BOSTON, MA, USA, NY IEEE, 18 mars 1997.

Pour les acquisitions d'événements ponctuels rapides et aléatoires de tels systèmes ne sont pas adaptés. En particulier, les contraintes temporelles des différents éléments de la chaîne d'acquisition et de traitement étant trop disparates, il n'est pas possible d'envisager une sécurisation globale de celle-ci. Chaque maillon de la chaîne doit donc être protégé indépendamment.

Le but de l'invention est donc de proposer un système capable de sécuriser l'acquisition et la mémorisation d'une information ponctuelle.

L'objet de l'invention est donc un système sécuritaire d'acquisition d'informations numériques émises sur un signal à une fréquence déterminée, le système comportant:
- des moyens d'acquisition des informations numériques émises sur le signal fonctionnant au rythme d'une horloge d'acquisition, synchronisée avec le signal porteur des informations numériques, lesdits moyens comprenant des moyens de codage,
- des moyens de détection d'absence d'information numérique sur le signal,
- des moyens de mémorisation connectés en sortie des moyens d'acquisition,
- des moyens de restitution fonctionnant au rythme d'une horloge synchronisée avec un signal de restitution et connectés en sortie des moyens de mémorisation, lesdits moyens comprenant des moyens de décodage, et
- les moyens d'acquisition sont adaptés pour transmettre aux moyens de mémorisation, soit les informations acquises durant une période d'un cycle synchronisé sur le signal de restitution, soit un drapeau représentatif de ce qu'aucune information n'a été acquise pendant cette période de cycle, les informations acquises et le drapeau étant codés par les moyens de codage avant leurs transmissions et étant décodés par les moyens de décodage en sortie des moyens de mémorisation.

D'autres caractéristiques de l'invention sont :
- les moyens de codage sont adaptés pour coder les informations sous la forme d'un flux série résultat d'une opération OU-exclusif entre les informations à transmettre et une séquence pseudo-aléatoire, et les moyens de décodage sont adaptés pour décoder le flux série par application sur celui-ci d'une opération OU-exclusif avec la même séquence pseudo-aléatoire ;
- les moyens de codage des informations acquises sont synchronisés sur l'horloge d'acquisition de façon à émettre le flux série au rythme d'un bit par coup d'horloge ;
- la durée de transmission du drapeau est inférieure à celle des informations acquises ;
- les moyens d'acquisition comportent des moyens d'émission d'un signal vers les moyens de restitution, ce signal étant apte à informer les moyens de restitution qu'une information a été acquise, ou non, pendant le cycle ;
- le cycle est synchronisé par un signal issu des moyens de restitution ; et
- les moyens de mémorisation comportent aux moins deux mémoires « premier entré/premier sorti » dans lesquelles les données codées des informations acquises ou de drapeau sont mémorisées alternativement à chaque cycle.

L'invention sera mieux comprise à la lecture de la description qui va suivre, donnée uniquement à titre d'exemple, et faite en référence aux dessins en annexe dans lesquels :
- la figure 1 est un schéma de principe d'un système d'acquisition selon l'invention ; et
- la figure 2 est un chronogramme de fonctionnement d'un tel système ; et
- la figure 3 est un schéma logique d'un codeur / décodeur utilisé dans un mode de réalisation préféré du système d'acquisition.

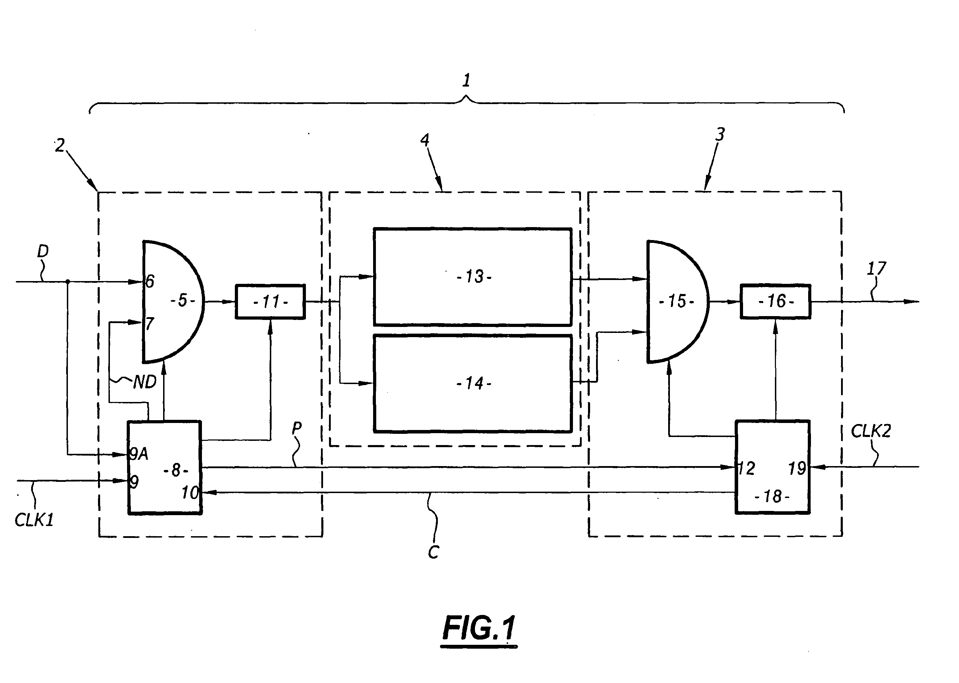

En référence à la figure 1, un système d'acquisition 1 comporte des moyens d'acquisition 2 connectés à des moyens de restitution 3 par l'intermédiaire de moyens de mémorisation 4.

Les moyens 2 d'acquisition comportent un multiplexeur 5 à deux entrées.

La première entrée 6 est propre à recevoir des données D en provenance, par exemple, d'un capteur ou d'une balise d'un système de communication sol-train de type ERTMS (European Rail Traffic Management System - Système de Gestion du Trafic Ferroviaire Européen) ou CBTC (Communications Based Train Control - Commande de Trains Basée sur les Communications). Ces données sont ponctuelles dans le sens où de grandes périodes sans donnée s'interposent entre chaque arrivée de données sur le multiplexeur 5. Elles sont aléatoires dans le sens où il n'est pas possible de déterminer l'instant d'arrivée de ces données.

La seconde entrée 7 reçoit un signal ND représentatif d'une absence de données généré par un détecteur 8 des moyens d'acquisition 2.

Ce détecteur 8 présente une entrée 9 de réception d'un signal d'horloge CLK1 synchronisé avec le rythme d'acquisition des données.

Le détecteur 8 comporte une deuxième entrée 9A pour la réception du signal de données D et une troisième entrée 10 pour la réception d'un signal C de cycle de restitution en provenance des moyens 3. Ce cycle a une période supérieure à celle des messages arrivant en entrée. Les moyens 2 d'acquisition comportent également un codeur 11 dont l'entrée est reliée à la sortie du multiplexeur 5 pour coder les données D ou le signal ND représentatif de l'absence de données.

Le détecteur 8 commande le multiplexeur 5 ainsi que le codeur 11. Il est également connecté à une entrée 12 des moyens 3 de restitution pour émettre un signal P de présence/absence de données pendant un cycle.

La sortie du codeur 11 est connectée à l'entrée des moyens 4 de mémorisation. Ceux-ci comportent deux mémoires 13, 14 « Premier entré - Premier sorti », dites également mémoires FIFO (de l'anglais « First In - First Out ») dont les entrées et sorties sont en parallèle.

Les sorties des deux mémoires 13, 14 sont connectées aux moyens 3 de restitution.

Les moyens 3 de restitution comportent un multiplexeur 15 recevant en entrée les données en provenance des mémoires 13, 14.

Les moyens 3 de restitution comportent un décodeur 16 connecté à la sortie du multiplexeur 15 et dont la sortie 17 est connectée au reste de la chaîne de restitution.

Les moyens 3 de restitution comportent également un générateur 18 de cycle 10 dont une entrée 19 reçoit une horloge de restitution CLK2. Cette horloge est synchronisée avec le rythme de fonctionnement des équipements se trouvant en aval du système 1 d'acquisition. Le générateur 18 est connecté au multiplexeur 15 et au décodeur 16 pour transmettre des signaux d'horloge et de commande. Il reçoit sur son entrée 12 le signal P de présence/absence de données provenant du détecteur 8.

Le fonctionnement du système va maintenant être décrit.

Le fonctionnement général du système 1 est basé sur le cycle C généré par le générateur 18. Ce cycle a une période supérieure à celle des messages arrivant en entrée.

Durant un cycle, le détecteur 8 détecte la présence de données D. Si des données 6 sont présentes, celles-ci sont codées par le codeur 11 avant d'être transmises aux moyens 4 de mémorisation.

Si aucune donnée 6 n'est détectée pendant le cycle, le détecteur 8 génère, en fin de cycle, une séquence ND, ou drapeau, telle que l'aval de la chaîne de traitement, puisse en déduire qu'aucune donnée n'a été reçue pendant le cycle. Le drapeau ND est également codé par le codeur 11 avant d'être transmis aux moyens 4 de mémorisation.

Ainsi, le multiplexeur 5 est placé en amont du codeur 11 de façon à fournir à celui-ci soit les données D, soit le drapeau ND.

Lors d'un cycle, le codeur 11 écrit les données codées dans une des mémoires 13, 14 pendant que le multiplexeur 15 lit les données contenues dans l'autre mémoire, et ceci en alternant à chaque cycle. La sélection de la mémoire d'écriture, respectivement de lecture, est synchronisée sur le cycle grâce à une logique d'aiguillage initialisée au démarrage du système.

Ces données sont décodées par le décodeur 16 capable d'effectuer la fonction inverse du codeur 11 afin de restituer les données originales en sortie 17.

Le détecteur 8 transmet aux moyens 3 de restitution, et en particulier au générateur 18 de cycles, le signal P représentatif de la présence ou de l'absence de données pendant le cycle. Cette information est utilisée par le générateur 18 pour informer le décodeur 16 du type de décodage à effectuer selon le type de données lues dans les moyens 4 de mémorisation.

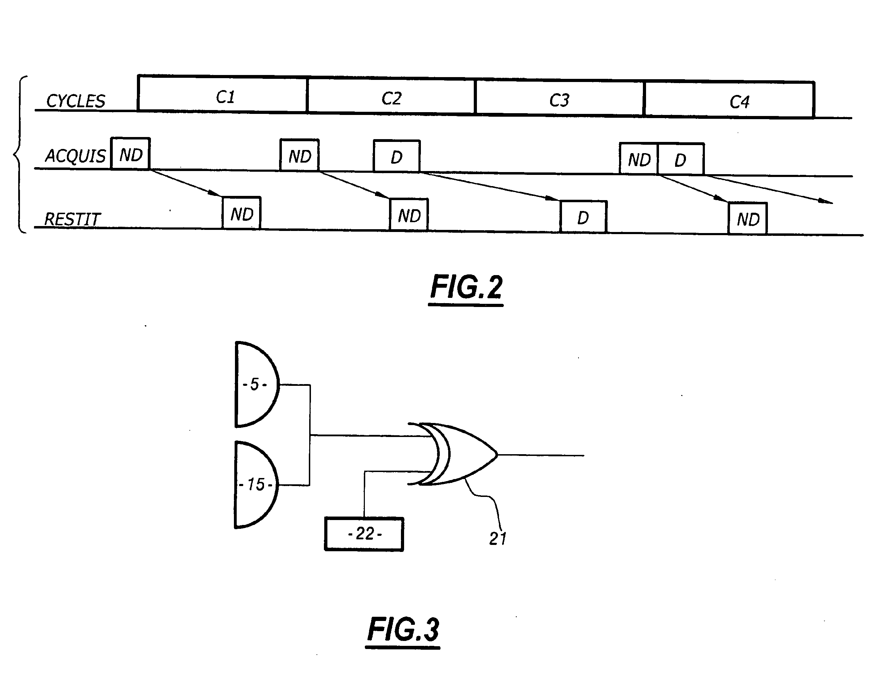

Ce fonctionnement du système 1 d'acquisition est illustré par le chronogramme de la figure 2.

Ce chronogramme schématique est divisé en cycles pair et impair. L'absence de données est symbolisée par les pavés numérotés ND comme le signal d'absence de données et les données par les pavés numérotés D comme le signal de données.

Les moyens 2 d'acquisition, ligne ACQUIS, émettent en fin de cycle le drapeau ND quand aucune donnée n'a été détectée comme dans les cycles C1 et C3. En revanche, dans les cycles C2 et C4, ce sont les données reçues D qui sont transmises.

Les moyens 3 de restitution, ligne RESTIT, lisent et décodent les données contenues dans les moyens 4 de mémorisation lors du cycle suivant. Par exemple, la donnée enregistrée lors du cycle C2 est lue lors du cycle C3.

On constate que lorsqu'une donnée commence à être acquise pendant la transmission du drapeau, comme par exemple, sur le schéma, en fin de cycle C3, les premiers bits de cette donnée sont perdus, le temps que le codage du drapeau s'achève.

Pour minimiser cette perte, la durée de transmission du drapeau est choisie très inférieure à celle de la donnée à acquérir. Par exemple, cette durée est choisie inférieure à la durée de transmission du préambule de message avant le flux de données effectives ; ou bien ce drapeau est transmis au rythme d'une horloge locale à fréquence très supérieure à celle de la fréquence d'acquisition des données d'entrée.

On constate aisément qu'une désynchronisation entre les moyens d'acquisition et les moyens de restitution va entraîner une impossibilité de décodage des informations. Par exemple, lors d'un cycle sans donnée, le décodage va générer en sortie un signal différent du drapeau ND.

Dans un mode de réalisation proposé de l'invention, le codeur 11 et le décodeur 16 sont composés, figure 3, d'une fonction OU exclusif 21 à deux entrées, l'une correspondant aux données à coder/décoder et l'autre à un générateur pseudo aléatoire 22. Les données sont présentées en entrée du codeur / décodeur sous la forme d'un flux série. Le cadencement du codage s'effectue au rythme de l'horloge d'acquisition, celui du décodage au rythme de l'horloge de restitution. Ainsi, le codeur 11 émet le flux série de données codées au rythme d'un bit codé par coup d'horloge.

La synchronisation effectuée par le détecteur 8 et le générateur 18 fait que le bit de la séquence pseudo aléatoire qui a servi à coder un bit d'information est le même que celui qui sert à décoder le bit correspondant, ce qui permet de retrouver la valeur initiale puisque *A* ⊕ *B* ⊕ *B* = *A*, c'est-à-dire qu'une opération OU-exclusif effectuée deux fois avec le même paramètre est égale à l'opération identité.

Le drapeau ND d'absence de données est injecté dans le multiplexeur 5 pendant une durée prédéterminée.

Le système d'acquisition ainsi décrit s'implémente de façon préférentielle sur un circuit intégré de type FPGA (« Field Programmable Gate-Arrays » - Réseau de Portes Programmable) ou ASIC (« Application Specific Integrated Circuit » - Circuit Intégré Spécifique à une application) ce qui permet de le réaliser pour un coût réduit.

Le système décrit permet ainsi, avantageusement, de créer une chaîne sécuritaire d'acquisition de données ponctuelles, rapides et aléatoires, ce qui le rend particulièrement adapté à une utilisation dans les systèmes ferroviaires.

## Revendications

1. Système (1) sécuritaire d'acquisition d'informations numériques émises sur un signal à une fréquence déterminée comprenant:
- des moyens d'acquisition (2) des informations numériques émises sur le signal fonctionnant au rythme d'une horloge d'acquisition (CLK1) synchronisée avec le signal porteur des informations numériques, lesdits moyens d'acquisition (2) comprenant des moyens de codage (11),
**caractérisé en ce que** le système comporte :
- des moyens de détection (8) d'absence d'information numérique sur le signal,
- des moyens de mémorisation (4) connectés en sortie des moyens d'acquisition (2),
- des moyens de restitution (3) fonctionnant au rythme d'une horloge synchronisée avec un signal de restitution (CLK2) et connectés en sortie des moyens de mémorisation, lesdits moyens de restitution (3) comprenant des moyens de décodage (16), et **en ce que**
- les moyens d'acquisition (2) sont adaptés pour transmettre aux moyens de mémorisation (4), soit les informations acquises durant une période d'un cycle synchronisé sur le signal de restitution (CLK2), soit un drapeau (ND) représentatif de ce qu'aucune information n'a été acquise pendant cette période de cycle, les informations acquises et le drapeau étant codés par les moyens de codage (11) avant leurs transmissions et étant décodés par les moyens de décodage (16) en sortie des moyens de mémorisation (4).

2. Système sécuritaire d'acquisition d'informations numériques selon la revendication 1, **caractérisé en ce que** les moyens de codage (11) sont adaptés pour coder les informations sous la forme d'un flux série résultat d'une opération OU-exclusif entre les informations à transmettre et une séquence pseudo-aléatoire, et les moyens de décodage (16) sont adaptés pour décoder le flux série par application sur celui-ci d'une opération OU-exclusif avec la même séquence pseudo-aléatoire.

3. Système sécuritaire d'acquisition d'informations numériques selon la revendication 2, **caractérisé en ce que** les moyens de codage (11) des informations acquises sont synchronisés sur l'horloge d'acquisition (CLK1) de façon à émettre le flux série au rythme d'un bit par coup d'horloge.

4. Système sécuritaire d'acquisition d'informations numériques selon l'une quelconque des revendication précédentes, **caractérisé en ce que** la durée de transmission du drapeau (ND) est inférieure à celle des informations acquises.

5. Système sécuritaire d'acquisition d'informations numériques selon l'une quelconque des revendications précédentes, **caractérisé en ce que** les moyens d'acquisition (2) comportent des moyens d'émission (8) d'un signal (P) vers les moyens de restitution (3), ce signal étant apte à informer les moyens de restitution (3) qu'une information a été acquise, ou non, pendant le cycle.

6. Système sécuritaire d'acquisition d'informations numériques selon l'une quelconque des revendications précédentes, **caractérisé en ce que** le cycle est synchronisé par un signal (C) issu des moyens de restitution (3).

7. Système sécuritaire d'acquisition d'informations numériques selon l'une quelconque des revendications précédentes, **caractérisé en ce que** les moyens de mémorisation (4) comportent aux moins deux mémoires (13, 14) «premier entré/premier sortie dans lesquelles les données codées des informations acquises ou de drapeau (ND) sont mémorisées alternativement à chaque cycle.

## Claims

1. Security system for the capture of digital information transmitted on a signal at a determined frequency comprising:
- means of capture (2) of the digital information transmitted on the signal operating at the rate of a data capture clock (CLK1) synchronised with the carrier signal of the digital information, said capture means (2) including encoding means (11),
**characterised in that** the system includes:
- means of detecting (8) the absence of digital information on the signal,
- means of restitution (3) functioning at the rate of a clock synchronised to a restitution signal (CLK2) and connected to the output of the storage means, said restitution means (3) including decoding means (16) and **in that**
- the capture means (2) are adapted to transmit to the storage means (4) either the information captured during a period of a cycle synchronised to the restitution signal (CLK2), or a flag (ND) representing the fact that no information has been captured during this cycle period, the captured information and the flag being encoded by encoding means (11) before being transmitted, and being decoded by decoding means (16) at the output of the storage means (4).

2. Security system for capture of digital information according to claim 1, **characterised in that** the encoding means (11) are adapted to encode the information in the form of a serial flow result by an exclusive-OR operation between the information to be transmitted and a pseudo-random sequence, and the decoding means (16) are adapted to decode the series flow by application thereto of an exclusive-OR operation using the same pseudo-random sequence.

3. Security system for capture of digital information according to claim 2, **characterised in that** the encoding means (11) for the captured information are synchronised to the data capture clock (CLK1) in such a way as to transmit the series flow at the rate of one bit per clock pulse.

4. Security system for capture of digital information according to any of the preceding claims, **characterised in that** the duration of transmission of the flag (ND) is less than that of the captured information.

5. Security system for capture of digital information according to any of the preceding claims, **characterised in that** the capture means (2) include means of transmission (8) of a signal (P) to the restitution means (3), this signal being capable of informing the restitution means (3) whether or not any information has been captured during the cycle.

6. Security system for capture of digital information according to any of the preceding claims, **characterised in that** the cycle is synchronised by a signal (C) from the restitution means (3).

7. Security system for capture of digital information according to any of the preceding claims, **characterised in that** the storage means (4) include at least two "first in/first out" memory devices (13, 14) in which the encoded data of the captured information or of the flag (ND) are stored alternately on each cycle.

## Patentansprüche

1. Sicherheitssystem (1) zum Erfassen digitaler Informationen, die auf einem Signal mit einer bestimmten Frequenz gesendet werden, wobei das Sicherheitssystem aufweist:
- Erfassungsmittel (2) zum Erfassen der auf dem Signal gesendeten digitalen Informationen, die im Rhythmus eines Erfassungstaktgebers (CLK1) arbeiten, der mit dem Trägersignal der digitalen Informationen synchronisiert ist, wobei die Erfassungsmittel (2) Kodiermittel (11) aufweisen,
**dadurch gekennzeichnet, dass** das System aufweist:
- Mittel zum Feststellen (8) des Fehlens von digitaler Information auf dem Signal,
- Speichermittel (4), die am Ausgang der Erfassungsmittel (2) angeschlossen sind,
- Wiedergabemittel (3), die im Rhythmus eines Taktgebers arbeiten, der mit einem Wiedergabesignal (CLK2) synchronisiert ist und die am Ausgang der Speichermittel angeschlossen sind, wobei die Wiedergabemittel (3) Dekodiermittel (16) aufweisen, und dass
- die Erfassungsmittel (2) eingerichtet sind, den Speichermitteln (4) entweder die Informationen zu übertragen, die während einer Periode eines auf dem Wiedergabesignal (CLK2) synchronisierten Zyklus erfasst werden, oder ein Flag (ND), das dafür repräsentativ ist, dass keine Information während dieser Zyklusperiode erfasst wurde, wobei die erfassten Informationen und das Flag von Kodiermitteln (11) vor ihrem Übertragen kodiert werden und von den Dekodiermitteln (16) am Ausgang der Speichermittel (4) dekodiert werden.

2. Sicherheitssystem zum Erfassen von digitalen Informationen nach Anspruch 1, **dadurch gekennzeichnet, dass** die Kodiermittel (11) eingerichtet sind, die Informationen in Form eines seriellen Stroms zu kodieren, der aus einer Exklusiv-ODER-Operation zwischen den zu übertragenden Informationen und einer pseudozufälligen Sequenz hervorgeht, und wobei die Dekodiermittel (16) eingerichtet sind, den seriellen Strom zu dekodieren, indem sie auf ihn eine Exklusiv-ODER-Operation mit der gleichen pseudozufälligen Sequenz anwenden.

3. Sicherheitssystem zum Erfassen digitaler Informationen nach Anspruch 2, **dadurch gekennzeichnet, dass** die Kodiermittel (11) für die erfassten Informationen auf dem Erfassungstaktgeber (CLK1) derart synchronisiert sind, dass der serielle Strom im Rhythmus von einem Bit pro Taktgeberimpuls gesendet wird.

4. Sicherheitssystem zum Erfassen digitaler Informationen nach einem der vorhergehenden Ansprüche, **dadurch gekennzeichnet, dass** die Übertragungsdauer des Flags (ND) kleiner ist als die der erfassten Informationen.

5. Sicherheitssystem zum Erfassen digitaler Informationen nach einem der vorhergehenden Ansprüche, **dadurch gekennzeichnet, dass** die Erfassungsmittel (2) Mittel (8) zum Senden eines Signals (P) an die Wiedergabemittel (3) aufweisen, wobei dieses Signal eingerichtet ist, die Wiedergabemittel (3) zu informieren, dass während des Zyklus eine Information erfasst wurde oder nicht.

6. Sicherheitssystem zum Erfassen digitaler Informationen nach einem der vorhergehenden Ansprüche, **dadurch gekennzeichnet, dass** der Zyklus von einem Signal (C) synchronisiert wird, das aus den Wiedergabemitteln (3) stammt.

7. Sicherheitssystem zum Erfassen digitaler Informationen nach einem der vorhergehenden Ansprüche, **dadurch gekennzeichnet, dass** die Speichermittel (4) mindestens zwei Speicher (13, 14) des Typs "first in/first out" (FIFO) aufweisen, in welchen die kodierten Daten der erfassten Informationen oder des Flags (ND) abwechselnd bei jedem Zyklus gespeichert werden.
